# EUROPÄISCHE PATENTSCHRIFT

(11) **EP 2 657 799 B1**
(45) Veröffentlichungstag und Bekanntmachung des Hinweises auf die Patenterteilung: **29.11.2017**
(21) Anmeldenummer: 13165297.6
(22) Anmeldetag: 25.04.2013
(51) Int. Cl.: G05B 19/4093

(54) **Verfahren zum Betreiben einer Schneidanlage**
Method for operating a cutting system
Procédé destiné au fonctionnement d' une installation de coupe

(30) Priorität: 25.04.2012 DE 102012103640
(43) Veröffentlichungstag der Anmeldung: 30.10.2013
(73) Patentinhaber: PERFECTA Schneidemaschinenwerk GmbH Bautzen, 02625 Bautzen (DE)
(72) Erfinder: Kaulitz, Thomas, 02625 Bautzen (DE); Neumann, Jann, 64289 Darmstadt (DE); Voigt, Peter, 02627 Weissenberg (DE)
(74) Vertreter: Stoffregen, Hans-Herbert

(56) Entgegenhaltungen:
- EP-A2- 0 942 344
- DE-A1- 10 144 696

## Beschreibung

Die Erfindung bezieht sich auf ein Verfahren zum Betreiben einer Schneidanlage, in der ein gegebenenfalls Teilstapel umfassender Stapel von Materialbogen in Nutzen geschnitten wird, wobei die Schneidanlage zumindest eine Schneidmaschine umfasst, in der der Stapel unter Zugrundelegung eines Schneidprogramms ersten Bearbeitungsschritten, wie Schneiden, Drehen, Schieben, unterzogen wird und wobei gegebenenfalls in zumindest einem der Schneidmaschine vor- und/oder nachgeordnetem Peripheriegerät zumindest ein zweiter Bearbeitungsschritt, wie Ausrichten, Entstapeln, Entladen, durchgeführt wird.

Zum Schneiden von sich in einem Stapel befindlichen Materialbogen, wie bedruckte Bogen, in sogenannte Nutzen werden Planschneidemaschinen benutzt. Entsprechende Planschneidemaschinen sind üblicherweise Einmesserschneidemaschinen, bei denen das Messer gegen eine Schneidleiste schneidet. Das zu schneidende Format, also Nutzen, wird mit Hilfe eines fahrbaren Schneidgutanschlags eingestellt, der als Sattel bezeichnet wird. Das Format entspricht sodann dem Abstand von Sattel zur Messerschneide.

Schnellschneider sind Planschneidemaschinen, bei denen mehrere Schnitte und gegebenenfalls nötige Nebenfunktionen wie Drehen des Stapels, Luftpolster, Auswürfe etc. programmiert werden können.

Entsprechende Schneidprogramme können gespeichert und zur Wiederholung erneut geladen werden.

Schneidprogramme nach dem Stand der Technik können durch manuelle Eingaben von Schnittmaßen und Befehlen erstellt werden. Auch die Möglichkeit einer automatischen Programmerstellung oder Nutzung von Vorstufendaten direkt aus der Maschinensteuerung ist gegeben. Eine interaktive Aufbereitung von Vorstufendaten für die Maschine ist gleichfalls bekannt.

Ein Schneidprogramm weist eine Kommandoliste auf, in der die einzelnen Arbeitsschritte, die nacheinander durchgeführt werden müssen, aufgelistet und sodann abgearbeitet werden müssen. Eine entsprechende Kommandoliste, die die Arbeits- oder Bearbeitungsschritte aufweist, beinhaltet u.a. Schneidmaß, Schnitt/Pressen, Pressdruck, Luftpolster, Auswerfer, Einstapeln, Einlagern, Auslagern oder Stapeldrehung.

Auch schließen Bearbeitungsschritte solche Schritte ein, die nicht unmittelbar an dem Stapel bzw. Teilstapel durchgeführt werden, wie das Entfernen der Späne, also Schnittreste.

Schneidanlagen, die neben einer entsprechenden Schneidmaschine wie Planschneidmaschine auch Peripheriegeräte, wie Rütteltische, Entstapler, Lufttische, Abstapler, umfassen, sind nicht nur in der Anschaffung sondern auch im Betreiben kostenintensiv, so dass eine optimale Ausnutzung schon aus Kostengründen gewünscht wird. Planen und Kalkulieren sind daher wichtig. Hierbei wird nach dem Stand der Technik zwischen zwei Arten bei der Planung und Kalkulation unterschieden. Zum einen gelangt die Vorwärtsterminierung, also die vorwärtsgerichtete Planung und Kalkulation, zum anderen die Rückwärtsterminierung, also die rückwärtsgerichtete Planung und Kalkulation, zur Anwendung. Die Planung von Durchlaufzeiten ist aus zuvor genannten Gründen überaus wichtig. Man benötigt folglich die Zeiten zur Kalkulation der Aufträge und zur Berechnung der Auslastung der Schneidanlagen. Dies ist auch für die Definition von Lieferterminen von Bedeutung.

Es ist bekannt, eine Betriebsdatenerfassung durchzuführen, die jedoch losgelöst von der Schneidanlage auf einer separaten Rechnerstation erfolgt.

Üblicherweise gelangt eine Nachkalkulation aus der Betriebsdatenerfassung (BDE), also aus BDE-Daten zur Anwendung. In der BDE werden Fertigungsaufträge gestartet, fertig gemeldet und gegebenenfalls Unterbrechungen gemeldet.

Bei der Vorplanung, d.h. zeitlichen Vorplanung eines Fertigungsauftrags, haben sich zwei Möglichkeiten etabliert. So kann eine Nutzung der Zeit aus der Statistik bei Wiederholaufträgen erfolgen, ein Verfahren, das jedoch grundsätzlich nicht praxisgerecht ist, da nur in seltenen Fällen standardisierte Bogenaufteilungen vorliegen. Alternativ hierzu kann ein statistischer Mittelwert aus gewonnenen Produktionsdaten - Auftragszeit geteilt durch die Anzahl der erfolgten Schnitte - ermittelt werden. Hieraus ergibt sich aus der Division von Auftragszeit und Gesamtzahl der Schnitte eine Konstante, die jedoch nur einen Mittelwert darstellt und sonstige Parameter, die den Schneidauftrag betreffen, wie Prozesszeiten vor, während und nach dem Schnitt, nicht einbezieht.

Somit ist nach dem Stand der Technik eine optimale Nutzung einer Schneidanlage nicht möglich.

Der EP 0 942 344 A2 ist ein Verfahren zum Betreiben einer Schneidmaschine zum Schneiden von gestapeltem, blättrigem Gut zu entnehmen. Um eine Anpassung der Arbeitsweise der Schneidmaschine während des Betriebs zu ermöglichen, werden Maschinen-, Programm- und Satzparameter berücksichtigt, die in erforderlichem Umfang geändert werden.

Um insbesondere in der Automobilindustrie Produktionsvorgänge weitgehend zu automatisieren, wird in Bearbeitungsstationen aus der Differenz effektiver Bearbeitungszeit und minimaler Bearbeitungszeit eine effektive Störzeit ermittelt, die zur Optimierung des fortlaufenden Prozesses fortlaufend mitberücksichtigt wird.

Der vorliegenden Erfindung liegt die Aufgabe zugrunde, ein Verfahren der eingangs genannten Art so weiterzubilden, dass eine optimale Nutzung der Schneidanlage möglich ist und insbesondere die Möglichkeit besteht, dass Schneidaufträge derart abgearbeitet werden, dass vorgegebene Endzeiten eingehalten werden.

Zur Lösung der Aufgabe wird erfindungsgemäß vorgeschlagen, dass Prozesszeit als erste Prozesszeit von jedem ersten Bearbeitungsschritt ermittelt wird und die ermittelten ersten Prozesszeiten zur Berechnung einer ersten Gesamtprozesszeit mathematisch verknüpft werden und dass unter Berücksichtigung der ersten Gesamtprozesszeit der Stapel der Schneidanlage zu einem einer gewünschten bzw. optimalen Nutzung entsprechenden Zeitpunkt zugeführt und in dieser bearbeitet wird.

Erfindungsgemäß wird die Ermittlung der Gesamtschneidzeit dem Schneidprogramm zugrundegelegt, wobei es unbeachtlich ist, ob das Schneidprogramm manuell, teilautomatisiert oder vollautomatisiert erzeugt worden ist.

Jeder einzelne Bearbeitungsschritt wird mit einer Zeit behaftet, wobei unter Bearbeitungsschritte auch solche zu verstehen sind, die nicht unmittelbar an dem zu schneidenden Stapel durchgeführt werden, wie das automatische Entfernen von Span, also Schnittabfall.

Es wird die jedem Arbeitsschritt zugeordnete erste Prozesszeit ermittelt, die ersten Prozesszeiten sodann mathematisch verknüpft und in Abhängigkeit von der Anzahl der Programmdurchläufe, also in Abhängigkeit von der Anzahl der zu bearbeitenden dem Stapel entnommenen Teilstapeln, die erste Gesamtprozesszeit ermittelt.

Erfindungsgemäß werden die Prozesszeiten der einzelnen Bearbeitungsschritte vor der Bearbeitung ermittelt, wobei ggfs. zuvor gleiche Bearbeitungsschritte wie Schieben über eine gleiche Strecke, Schneiden oder gleiches Drehen verknüpft werden, sodann mit ggfs. vorhandenen weiteren ersten Prozesszeiten verknüpft und additiv zusammengefasst werden, um sodann eine für die Abwicklung des Schneidauftrags spezifische Gesamtprozesszeit zu erhalten, in Abhängigkeit von der ein Zuführen des Stapels zu der Schneidanlage und ein Abarbeiten erfolgt. Somit werden eine optimale Nutzung der Schneidanlage ermöglicht und bei Vorliegen hinreichender Aufträge Totzeiten vermieden bzw. vorgegebene Lieferdaten sichergestellt.

Erfindungsgemäß wird ein vorgegebenes Schneidprogramm sukzessiv wie zeilenweise abgearbeitet, wobei jedem Arbeitsschritt zuzuordnende Zeit z.B. einer Datenbank oder einer Look-up-Tabelle entnommen wird oder unter Berücksichtigung eines oder mehrerer dem Arbeitsschritt zugeordneter Parameter berechnet wird. Die ersten Prozesszeiten werden sodann mathematisch verknüpft, insbesondere aufsummiert und mit einem Faktor, der gleich oder größer 1 ist, multipliziert, um sodann die Gesamtschneidzeit zu erhalten.

In Abhängigkeit wird sodann ein Schneidauftrag abgearbeitet, wobei die Reihenfolge der zu bearbeitenden Stapel unter Berücksichtigung der berechneten Gesamtprozesszeiten erfolgt.

In hervorzuhebender Weiterbildung ist vorgesehen, einem Schneidauftrag unterschiedliche Abarbeitungsvarianten zur Durchführung des Schneidauftrags zuzuordnen, so dass sich unterschiedliche Gesamtauftragszeiten ergeben können. Sodann wird von der Schneidanlagensteuerung bzw. derem Rechner dasjenige ausgewählt, das z. B. die kleinste Gesamtprozesszeit aufweist, oder aber in Abhängigkeit von z.B. der Anzahl der durchzuführenden Schnitte zum geringsten Materialverschleiß der Schneidmaschine führt. Somit kann unter Zugrundelegung vorgegebener Kriterien eine Optimierung erfolgen.

In weiterer hervorzuhebender Ausgestaltung der Erfindung ist vorgesehen, dass bei vorgegebenem Nutzen-Layout des Materialstapels mittels eines Schneidgenerators Schneidprogramme generiert werden und dass von den generierten Schneidprogrammen dasjenige zum Durchführen des Schneidens der Nutzen ausgewählt wird, das entweder die kürzeste Gesamtschneidzeit aufweist oder nach Vorgabe einer Gesamtschneidzeit als erstes generiertes Schneidprogramm der vorgegebenen Gesamtschneidzeit entspricht oder diese unterschreitet.

Somit ergibt sich ein automatisches Generieren eines Schneidprogramms, das unter Berücksichtigung vorgegebener Kriterien wie kürzeste Zeit, geringster Verschleiß oder Ähnliches optimiert wird.

Des Weiteren ist erfindungsgemäß vorgesehen, dass zur Optimierung der Ausnutzung der Schneidanlage Nebenbedingungen ergänzend berücksichtigt werden; denn Art und Anzahl der Peripheriegeräte und die personelle Maschinenbesetzung beeinflussen den Gesamtprozess maßgeblich. Dabei können verschiedene Prozesse zeitlich parallel verlaufen, wie z.B. Transport, Absetzen oder Verpackung nach dem Schneiden und Stapelbildung, Ausrichten und Auspressen vor dem Schneiden, um nur beispielhaft zweite Arbeits- bzw. Bearbeitungsschritte zu nennen.

Zur Ermittlung der Schneidauftragsgesamtdauer werden die diesbezüglichen Nebenbedingungen einbezogen, wobei unter Berücksichtigung der Nebenbedingungen die zugrundezulegenden Zeiten entsprechend gewichtet werden.

Erfindungsgemäß kann in Abhängigkeit von der zuvor berechneten Schneidauftragsgesamtdauer die Bearbeitung von Stapeln in gewünschter Reihenfolge erfolgen, um nicht nur die Schneidanlage optimal auszunutzen, sondern auch termingerecht Schneidaufträge abzuschließen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine Prinzipdarstellung zur Ermittlung von Schneidzeiten,
- Fig. 2: Ablauf eines Berechnungsprogramms,
- Fig. 3: Ablauf eines weiteren Berechnungsprogramms unter Zugrundelegung verschiedener Schneidprogramme,
- Fig. 4: Verfahrensablauf zur Durchführung eines Schneidprogramms,
- Fig. 5: eine Matrix von Bearbeitungsschritten und
- Fig. 6: eine Prinzipdarstellung einer Schneidanlage.

Um entsprechend der erfindungsgemäßen Lehre eine Schneidanlage unter Berücksichtigung vorgegebener Kriterien optimal nutzen zu können, insbesondere eine Schneidanlage maximal auszulasten und/oder die durchzuführenden Abarbeitungsschritte in Bezug auf die Zeitdauer und/oder Verschleiß der zum Einsatz gelangenden Komponenten bzw. Geräte optimal nutzen zu können, und/oder eine termingerechte Bearbeitung eines oder mehrerer Stapel von Materialbogen sicherzustellen, wird erfindungsgemäß zumindest in Bezug auf das Schneiden der in dem Stapel vorliegenden Materialbogen in Nutzen jeder Bearbeitungsschritt - auch Arbeitsschritt genannt - mit einer ermittelten Zeit - erste Prozesszeit - behaftet, um sodann aus den einzelnen ersten Prozesszeiten eine erste Gesamtprozesszeit zu ermitteln, innerhalb der das Schneiden des Stapels in entsprechende Nutzen durchgeführt werden kann, wobei ein vorgegebenes Layout berücksichtigt wird. Die so ermittelte Gesamtprozesszeit dient dazu zu entscheiden, wann ein Stapel der Schneidanlage zugeführt wird. Zuführen bedeutet dabei u.a., dass für die Abarbeitung und Terminplanung entweder die Reihenfolge zur Abarbeitung aus einer vorgegebenen Anzahl von bevorrateten Stapeln bestimmt wird oder das Anliefern von Stapeln just in time ermöglicht wird.

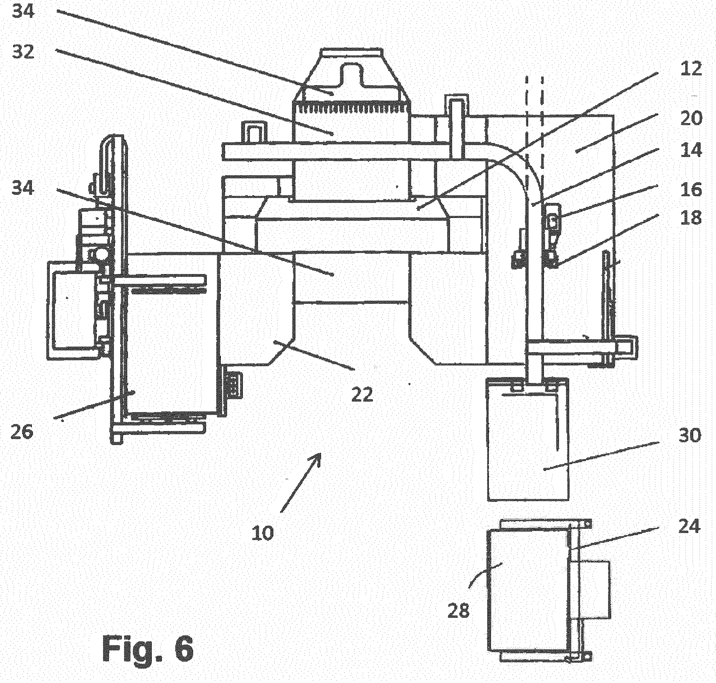

Der Fig. 6 ist rein prinzipiell eine Schneidanlage 10 zu entnehmen, die als wesentliche Bestandteile eine Schneidmaschine 12, eine Führungsschiene 14 mit einem Schlitten 16 mit Zange 18 als Transportsystem, Lufttische 20, 22, einen Stapelheber 24 und einen Abstapler 26 umfasst. Von dem Stapelheber 24 wird ein Teilstapel eines auf dem Stapelheber 24 befindlichen Stapels 28 bogenförmigen bedruckten Materials an eine Rüttelvorrichtung 30 übergeben, um den Teilstapel auszurichten. Der Teilstapel wird sodann mittels der von dem Schlitten 16 ausgehenden und entlang der Führungsschiene 14 verstellbaren Zange 18 erfasst und entlang des Lufttischs 20 zum Hintertisch 32 der Schneidmaschine 12 transportiert und dort abgelegt, und zwar zwischen einem Sattel 34 und dem nicht dargestellten Messer der Schneidmaschine 12. Mittels des Sattels 34 wird der Teilstapel im erforderlichen Umfang zu dem Messer ausgerichtet, um entsprechend eines vorgegebenen Schneidprogramms Nutzen zu schneiden. Hierzu kann es auch erforderlich sein, dass der Teilstapel im erforderlichen Umfang gedreht wird. Die geschnittenen Nutzen werden sodann von einem nicht dargestellten Bediener oder automatisiert vom Vordertisch 34 der Schneidmaschine über den Lufttisch 22 an den Abstapler 11 übergeben, um sodann in gewohnter Weise weiter verarbeitet wie sortiert, gestapelt und verpackt zu werden.

Aufgrund der erfindungsgemäßen Lehre besteht nunmehr die Möglichkeit, die Schneidanlage 10 optimal zu nutzen und insbesondere entsprechend erfolgter Vorgaben die Schneidauftragsgesamtdauer eines jeden Stapels bei der Belegung des Schneidautomatens und dessen Einsatz zu berücksichtigen.

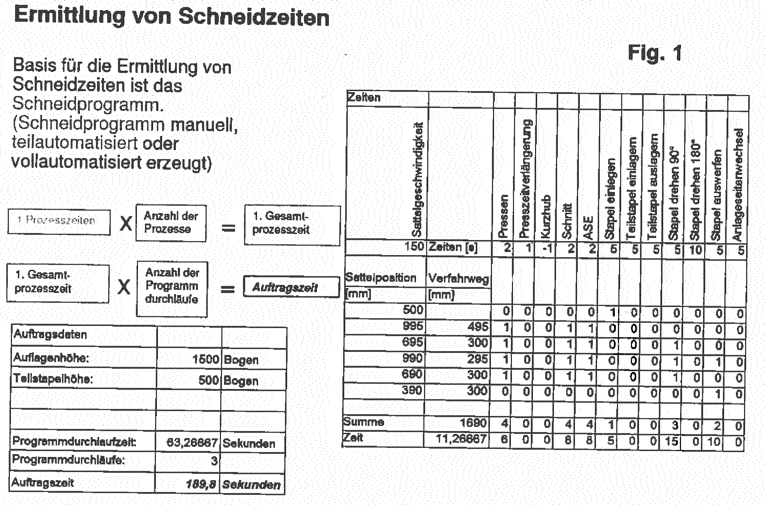

Anhand der Fig. 1 soll rein prinzipiell verdeutlicht werden, dass entsprechend der erfindungsgemäßen Lehre jeder Arbeitsschritt, der zum Durchführen eines Schneidprogramms erforderlich ist, zeitmäßig ermittelt wird. Werden von einem Stapel Teilstapel nacheinander abgearbeitet, so müssen entsprechend der Anzahl der Teilstapel eine gleiche Anzahl von Programmdurchläufen berücksichtigt werden.

Im Ausführungsbeispiel der Fig. 1 ist ein Stapel von 1.500 Bogen in Nutzen zu schneiden. Entsprechend der angenommenen Kapazität der Schneidanlage können maximal 500 Bogen auf einmal geschnitten werden, so dass der Gesamtstapel in drei Stapel ä 500 Bogen aufgeteilt wird. Entsprechend dem Schneidprogramm, das manuell, teilautomatisiert oder vollautomatisiert erzeugt sein kann, werden die einzelnen Bearbeitungsschritte Schritt für Schritt erfasst, um so für den jeweiligen Bearbeitungsschritt eine erste Prozesszeit zu ermitteln.

In der ersten Zeile der rechts in der Fig. 1 dargestellten Matrix sind Bearbeitungsschritte aufgelistet, in der zweiten Zeile die jedem Bearbeitungsschritt zugeordnete Prozesszeit.

In der ersten und zweiten Spalte wird sodann die Position des Sattels angegeben, also des Schneidgutanschlags, an dem der Teilstapel der Bogen anliegen muss, um eine definierte Position zum Schneidmesser einzuhalten. Entsprechend dem Gesamtverfahrweg (1690 mm) dauert die Gesamtverstellzeit 11,2666667 Sekunden bei einer Sattelgeschwindigkeit von 150 mm/s. Für die einzelnen Bearbeitungsschritte werden insgesamt 52 s benötigt, wie die unterste Zeile der Matrix verdeutlicht. Somit ergibt sich eine Gesamtzeit der ersten Prozesszeiten für einen Teilstapel von 63,266667 Sekunden, die der Programmdurchlaufzeit entspricht. Da insgesamt drei Teilstapel zur Abarbeitung des Gesamtstapels benötigt werden, beträgt die erste Gesamtprozesszeit, also die Dauer des Abarbeitens des Gesamtstapels in der Schneidmaschine, 189,8 s.

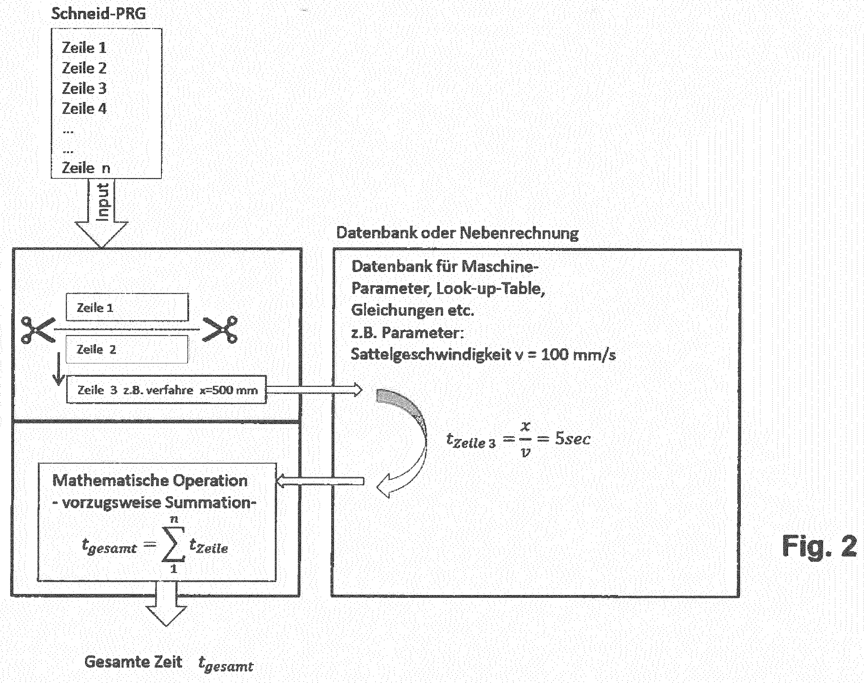

Das Berechnen der ersten Gesamtprozesszeit wird auch anhand der Fig. 2 verdeutlicht. Unter Zugrundelegen eines Schneidprogramms, das Input für das Berechnungsverfahren ist, wird im Ausführungsbeispiel das Programm in einzelne Zeilen geteilt, wobei jede Zeile einen Arbeitsschritt des Schneidprozesses berücksichtigt. Zu jedem Arbeitsschritt erfolgt eine Abfrage aus einer Datenbank, Look-up-Tabelle oder es wird - wie die Prinzipdarstellung verdeutlicht - der Wert Verfahrweg X des Sattels und Sattelgeschwindigkeit V mit V = 100 mm/sec im Ausführungsbeispiel an eine Gleichung übergeben, um sodann für den entsprechenden Bearbeitungsschritt eine erste Prozesszeit zu ermitteln. Im Ausführungsbeispiel wird z. B. der Verfahrweg (500 mm) an die Datenbank/Nebenrechnung übergeben. Dort ist die Verfahrgeschwindigkeit des Sattels hinterlegt.

Es erfolgt die Berechnung der Bearbeitungszeit für die Zeile 3, die den Bearbeitungsschritt Verstellen "Sattel" beinhaltet. Der Wert wird sodann an das Berechnungsverfahren übermittelt.

Die einzelnen ersten Prozesszeiten werden im Berechnungsprogramm einer weiteren mathematischen Operation, insbesondere einer Summation unterzogen, wobei eine Multiplikation mit einem oder mehreren Korrekturfaktoren durchgeführt werden kann. Als Ergebnis des Berechnungsverfahrens ergibt sich die erste Gesamtprozesszeit und sodann in Abhängigkeit von dem Durchlauf der durchzuführenden einzelnen Schneidprozessschritte, also in Abhängigkeit von der Anzahl der zu bearbeitenden Teilstapel die Gesamtschneidzeit.

Die Erfindung wird selbstverständlich nicht verlassen, wenn nicht zeilenweise abgearbeitet wird, sondern in sonstiger programmüblicher Weise. Auch können zuvor Gruppen gleicher Prozessschritte gebildet und zeitmäßig zusammengefasst werden.

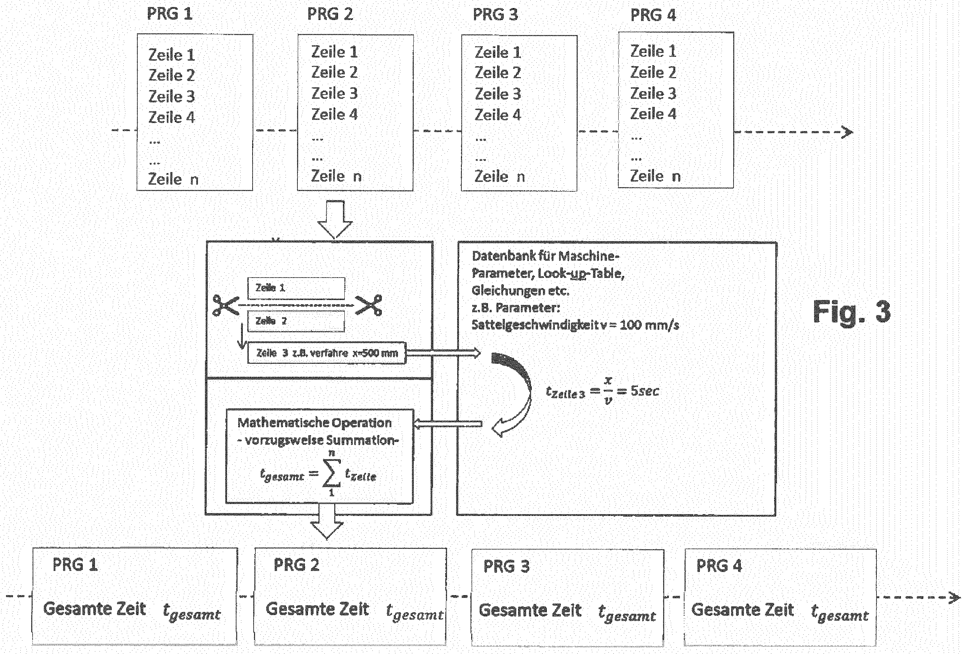

Entsprechend der Fig. 3 besteht die Möglichkeit, mehrere Schneidprogramme zur Verfügung zu stellen, um sodann auf der Basis der unterschiedlichen Schneidprogramme PRG1, PRG2, PRG3, PRG4 unter Berücksichtigung zuvor erfolgter Erläuterungen erste Gesamtprozesszeiten zu ermitteln. Aus den ermittelten Gesamtzeiten wird sodann dasjenige Programm ausgewählt, das z. B. die minimale Gesamtprozesszeit ergibt. Bei der Berechnung der ersten Gesamtprozesszeit wird jedoch zuvor berücksichtigt, welches Kriterium zur Optimierung des Schneidablaufs ausgewählt wird. Wird z.B. der Verschleiß der Schneide der Schneidmaschine als Kriterium ausgewählt, so würde bei der Berechnung des Arbeitsschritts Schneiden neben dem z. B. einer Look-up-Tabelle entnommenen Wert ein Faktor berücksichtigt werden, der dazu führt, dass Programme mit einer hohen Anzahl von Schnitten zu einer ersten Gesamtprozesszeit führen, die größer als die eines Programms ist, bei dem weniger Schnitte durchgeführt werden, die ersten Prozesszeiten für die verbleibenden Bearbeitungsschritte jedoch gleich oder in etwa gleich sind.

Es besteht nach der erfindungsgemäßen Lehre auch die Möglichkeit, unter Zugrundelegung des Layouts der zu schneidenden Nutzen das Schneidprogramm selbst zu generieren. Unter Berücksichtigung zuvor erfolgter Lehre kann zur Auswahl des zur Anwendung gelangenden Schneidprogramms ein Zeitwert vorgegeben werden, so dass das Programm, das als erstes die vorgegebene Zeit erreicht bzw. unterschreitet ausgewählt wird.

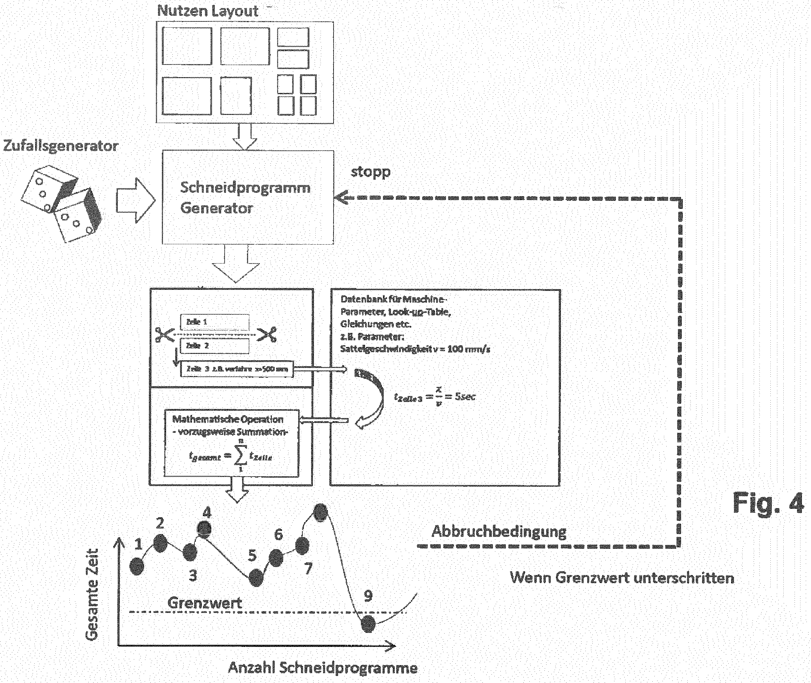

Dies wird anhand der Fig. 4 verdeutlicht. So weist das 9. Schneidprogramm als erstes eine erste Gesamtprozesszeit auf, die unterhalb eines vorgegebenen Grenzwerts liegt mit der Folge, dass weitere Programme nicht berechnet werden. Das Erreichen oder Unterschreiten des Grenzwerts stellt somit eine Abbruchbedingung für den Schneidprogrammgenerator dar. Es besteht auch die Möglichkeit, nach Abschluss der Generierung der möglichen als vernünftig zu bewertenden Schneidprogramme dasjenige auszuwählen, das die kleinste Gesamtprozesszeit benötigt. Im Ausführungsbeispiel wäre das das Programm 5, sofern ausschließlich Programme 1 bis 8 generiert werden.

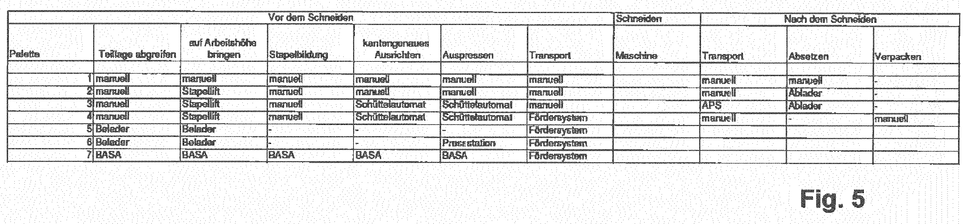

Anhand der Fig. 5 soll erläutert werden, dass neben der Berücksichtigung der ersten Prozesszeiten auch zweite Prozesszeiten ergänzend bei der Berechnung und Nutzung der Schneidanlage einbezogen werden können, d.h., dass sogenannte Nebenbedingungen zusätzlich berücksichtigt werden; denn Peripheriegeräte und Maschinenbesetzung beeinflussen den Prozess maßgeblich. So können bei Ein-/Zweimannbedienung oder Einsatz von Peripheriegeräten mit Automatisierung verschiedene Prozesse zeitlich parallel ablaufen. Dies kann bei der Berechnung des Schneidprozesses einfließen. Bearbeitungsschritte, die neben dem Schneiden, also einem ersten Bearbeitungsschritt, sowohl vor als auch nach dem Schneiden manuell oder automatisch erfolgen, können einbezogen werden. Auch können Informationen über spezifische Maschineneinstellungen und Schneidsystemkonfigurationen aus hinterlegten Daten in der Schneidemaschine gewonnen werden und Eingang in die durchzuführende Berechnung finden. Die Berechnung der Schneidauftragsgesamtdauer erfolgt sodann unter Berücksichtigung dieser zusätzlich einbezogenen zweiten Bearbeitungsschritte, denen zweite Prozesszeiten zugeordnet sind.

## Patentansprüche

1. Verfahren zum Betreiben einer Schneidanlage (10), in der ein gegebenenfalls Teilstapel umfassender Stapel (28) von Materialbogen in Nutzen geschnitten wird, wobei die Schneidanlage zumindest eine Schneidmaschine (12) umfasst, in der der Stapel unter Zugrundelegung eines Schneidprogramms ersten Bearbeitungsschritten, wie Schneiden, Drehen, Schieben, unterzogen wird, **dadurch gekennzeichnet dass** Prozesszeit als erste Prozesszeit von jedem ersten Bearbeitungsschritt ermittelt wird und die ermittelten ersten Prozesszeiten zur Berechnung einer ersten Gesamtprozesszeit mathematisch verknüpft werden und dass unter Berücksichtigung der ersten Gesamtprozesszeit eine Zuführung des Stapels (20) an die Schneidanlage (10) und eine Bearbeitung in dieser erfolgt.

2. Verfahren nach Anspruch 1,
**dadurch gekennzeichnet,**
**dass** die jeweilige erste Prozesszeit unter Zugrundelegung des konkreten jeweiligen ersten Bearbeitungsschritts vorzugsweise aus einer Datenbank abgerufen wird oder einer Look-up-Tabelle entnommen wird oder unter Berücksichtigung eines dem ersten Bearbeitungsschritt zugeordneten Parameters unter Zugrundelegung einer Gleichung berechnet wird.

3. Verfahren nach Anspruch 1 oder 2 ,
**dadurch gekennzeichnet,**
**dass** zur Berechnung der ersten Gesamtprozesszeit zunächst erste Prozesszeiten von gleichen ersten Prozessschritten wie Schieben über eine gleiche Strecke, Schneiden oder gleiches Drehen, verknüpft und sodann mit ggfs. vorhandenen weiteren ersten Prozesszeiten verknüpft werden.

4. Verfahren nach Anspruch 1, wobei in zumindest einem der Schneidmaschine (12) vor- und/oder nachgeordnetem Peripheriegerät (20, 22, 24, 26, 30) zumindest ein zweiter Bearbeitungsschritt, wie Ausrichten, Entstapeln, Entladen, durchgeführt wird,
**dadurch gekennzeichnet,**
**dass** für jeden zweiten Bearbeitungsschritt eine Prozesszeit als zweite Prozesszeit ermittelt wird, dass die zweiten Prozesszeiten zur Berechnung einer zweiten Gesamtprozesszeit mathematisch verknüpft werden und sodann die erste und zweite Gesamtprozesszeit zur Ermittlung einer Schneidauftragsgesamtdauer mathematisch verknüpft werden.

5. Verfahren nach zumindest einem der vorherigen Ansprüche,
**dadurch gekennzeichnet,**
**dass** die mathematische Verknüpfung eine Summation ist, wobei die Summe mit einem Faktor X mit 1 ≤ X multipliziert wird.

6. Verfahren nach zumindest einem der vorherigen Ansprüche,
**dadurch gekennzeichnet,**
**dass** in der Schneidanlage (10) nacheinander Stapel (28) von Materialbogen geschnitten werden, wobei die Stapel in ihrer Reihenfolge unter Berücksichtigung zumindest der ersten Gesamtprozesszeit der Schneidanlage zugeführt werden.

7. Verfahren nach zumindest einem der vorherigen Ansprüche,
**dadurch gekennzeichnet,**
**dass** bei vorgegebenem Nutzen-Layout des Materialstapels (28) mittels eines Schneidgenerators Schneidprogramme generiert werden und dass von den generierten Schneidprogrammen dasjenige zum Durchführen des Schneidens der Nutzen ausgewählt wird, das entweder die kürzeste Gesamtschneidzeit aufweist oder nach Vorgabe einer Gesamtschneidzeit als erstes generiertes Schneidprogramm der vorgegebenen Gesamtschneidzeit entspricht oder diese unterschreitet.

8. Verfahren nach zumindest einem der vorherigen Ansprüche,
**dadurch gekennzeichnet,**
**dass** ermittelte erste und/oder zweite Prozesszeit (Soll-Zeit) mit tatsächlicher Dauer der ersten und/oder zweiten Prozesszeit (Ist-Zeit) verglichen wird und in Abhängigkeit von dem der Prozesszeit zugrundeliegendem Bearbeitungsschritt eine Anpassung der Soll-Zeit an die Ist-Zeit erfolgt.

9. Verfahren nach zumindest einem der vorherigen Ansprüche,
**dadurch gekennzeichnet,**
**dass** ein mit der Steuerung der Schneidanlage (10) verbundener Rechner jeweilige zumindest erste Gesamtprozesszeit von mehreren Schneidprogrammen zur Abwicklung eines Schneidauftrags berechnet und dass unter Berücksichtigung vorgegebener Kriterien, wie Zeitoptimierung, Materialverschleiß, mit demjenigen Schneidprogramm die Schneidanlage betrieben wird, das optimiert für das ausgewählte Kriterium ist.

## Claims

1. Method for operating a cutting facility (10), in which a stack (28) of material sheets, possibly comprising part-stacks, is cut in blanks, said cutting facility comprising at least one cutting machine (12), in which said stack is subjected on the basis of a cutting program to first processing steps, such as cutting, rotating, moving,
wherein
process time is ascertained as a first process time of every first processing step and the ascertained first process times are mathematically linked for calculation of a first total process time, and wherein feeding of the stack (20) to the cutting facility (10) and processing therein take place taking into account said first total process time.

2. Method according to claim 1,
wherein
the respective first process time is, on the basis of the specific respective first processing step, preferably called from a database or taken from a look-up table or calculated on the basis of an equation by taking into account a parameter associated with said first processing step.

3. Method according to claim 1 or 2,
wherein
for calculation of the first total process time, initially the first process times of identical first process steps, like moving over a same distance, cutting or identical rotating, are linked and then linked to possibly existing further first process times.

4. Method according to claim 1, where at least one second processing step such as aligning, destacking or unloading is performed in at least one peripheral unit (20, 22, 24, 26, 30) arranged upstream or downstream of the cutting machine (12),
wherein
for every second processing step a process time is ascertained as a second process time, wherein said second process times are mathematically linked for calculation of a second total process time, and then the first and second total process times are mathematically linked for ascertaining a total duration of a cutting job.

5. Method according to at least one of the preceding claims,
wherein
the mathematical linkage is a summation, the sum being multiplied with a factor X where 1 ≤ X.

6. Method according to at least one of the preceding claims,
wherein
in the cutting facility (10) stacks (28) of material sheets are consecutively cut, said stacks being fed to said cutting facility in their sequence, taking into account at least the first total process time.

7. Method according to at least one of the preceding claims,
wherein
with a specified blank layout of the material stack (28), cutting programs are generated by means of a cutting generator and of said generated cutting programs the one selected for performing cutting of the blank is that which either has the shortest total cutting time or, after specification of a total cutting time, is the first generated cutting program to match or fall below the specified total cutting time.

8. Method according to at least one of the preceding claims,
wherein
an ascertained first and/or second process time (set time) is compared with the actual duration of said first and/or second process time (actual time), and depending on the processing step forming the basis of the process time the set time is matched to the actual time.

9. Method according to at least one of the preceding claims,
wherein
a computer connected to the control unit of the cutting facility (10) calculates the respective at least first total process time of several cutting programs for handling of a cutting order, and wherein, taking into account predetermined criteria like time optimization and material wear, the cutting facility is operated with that cutting program which is optimized for the selected criterion.

## Revendications

1. Procédé pour l'exploitation d'une installation de coupe (10) dans laquelle une pile (28) de matériaux en feuille comprenant le cas échéant une pile partielle est coupée en produits finis, sachant que l'installation de coupe comprend au moins une machine de coupe (12) dans laquelle la pile est soumise, sur la base d'un programme de coupe, à de premières étapes de traitement telles que coupe, rotation, déplacement,
**caractérisé en ce**
**que** le temps de processus est déterminé comme premier temps de processus de chaque première étape de traitement et que les premiers temps de processus déterminés sont combinés mathématiquement pour calculer un premier temps total de processus et qu'un approvisionnement de la pile (20) dans l'installation de coupe (10) et un traitement de celle-ci ont lieu en tenant compte dudit premier temps total de processus.

2. Procédé selon la revendication 1,
**caractérisé en ce**
**que** le premier temps de processus sur la base de la première étape concrète de traitement est extrait de préférence d'une base de données ou d'une table de consultation ou est calculé sur la base d'une équation en fonction d'un paramètre attribué à la première étape de traitement.

3. Procédé selon la revendication 1 ou 2,
**caractérisé en ce**
**que**, pour calculer le premier temps total de processus, des premiers temps de processus de premières étapes identiques, telles que le déplacement sur une même distance, la coupe ou la rotation à l'identique, sont tout d'abord combinés entre eux, puis combinés avec d'autres premiers temps de processus existants le cas échéant.

4. Procédé selon la revendication 1, sachant qu'au moins une seconde étape de traitement, telle qu'alignement, dépilage, déchargement, est réalisée dans au moins un appareil périphérique (20, 22, 24, 26, 30) situé en amont et/ou en aval de la machine de coupe (12),
**caractérisé en ce**
**qu'**un temps de processus est déterminé comme second temps de processus pour la seconde étape de traitement, que les seconds temps de processus sont combinés mathématiquement pour calculer un second temps total de processus et qu'ensuite, le premier temps total de processus et le second sont combinés mathématiquement pour déterminer une durée totale de la commande de coupe.

5. Procédé selon au moins une des revendications précédentes,
**caractérisé en ce**
**que** la combinaison mathématique est une addition, sachant que la somme est multipliée par un facteur X avec 1 ≤ X.

6. Procédé selon au moins une des revendications précédentes,
**caractérisé en ce**
**que** des piles (28) de matériaux en feuille sont coupées successivement dans l'installation de coupe (10), sachant que les piles sont approvisionnées dans l'installation de coupe dans l'ordre, en tenant compte au moins du premier temps total de processus.

7. Procédé selon au moins une des revendications précédentes,
**caractérisé en ce**
**que** des programmes de coupe sont générés au moyen d'un générateur de coupe pour une maquette prédéfinie du produit fini de la pile de matériaux (28) et qu'est sélectionné, parmi les programmes de coupe générés pour réaliser la coupe des produits finis, soit celui qui présente le temps total de coupe le plus court, soit, après fixation d'un temps total de coupe, celui qui correspond au premier programme de coupe généré dont la durée est égale ou inférieure au temps total de coupe fixé.

8. Procédé selon au moins une des revendications précédentes,
**caractérisé en ce**
**que** le premier et/ou le second temps de processus (temps de consigne) est comparé à la durée réelle du premier et/ou du second temps de processus (temps réel) et qu'un ajustement du temps de consigne au temps réel a lieu en fonction de l'étape de traitement déterminant le temps de processus.

9. Procédé selon au moins une des revendications précédentes,
**caractérisé en ce**
**qu'**un ordinateur connecté à la commande de l'installation de coupe (10) calcule au moins le premier temps total de processus de plusieurs programmes de coupe pour exécuter une commande de coupe et qu'en tenant compte de critères prédéfinis tels qu'optimisation du temps, usure des matériaux, l'installation de coupe est exploitée avec le programme de coupe qui est optimisé pour le critère sélectionné.
